(19) Europäisches Patentamt / European Patent Office / Office européen des brevets

(11) **EP 4 166 514 B1**

(12) **EUROPEAN PATENT SPECIFICATION**

(45) Date of publication and mention of the grant of the patent:
**15.11.2023 Bulletin 2023/46**

(21) Application number: **21382918.7**

(22) Date of filing: **13.10.2021**

(51) International Patent Classification (IPC):
**C02F 3/28** (2023.01)

(52) Cooperative Patent Classification (CPC):
**C02F 3/2846; C02F 3/2886;** C02F 3/2873;
C02F 2201/005; C02F 2203/006; C02F 2209/005;
C02F 2209/40; C02F 2209/42; C02F 2301/043;
C02F 2301/046; C02F 2301/103; Y02E 50/30

(54) **COMBINED UASB REACTOR-SOLIDS ANAEROBIC DIGESTER DEVICE AND METHOD FOR TREATING UNSETTLED SEWAGE**

KOMBINIERTE UASB-REAKTOR-/FESTSTOFFVERGÄRUNGSANLAGENVORRICHTUNG UND VERFAHREN ZUR BEHANDLUNG VON UNGEKLÄRTEM ABWASSER

DISPOSITIF COMBINÉ DE RÉACTEUR UASB-DIGESTEUR ANAÉROBIE DE SOLIDES ET PROCÉDÉ DE TRAITEMENT D'EAUX USÉES NON DÉCANTÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023 Bulletin 2023/16**

(73) Proprietor: **FCC Aqualia, S.A.**
**28050 Madrid (ES)**

(72) Inventors:
• **LARA CORONA, Enrique**
**41003 Sevilla (ES)**
• **FERNÁNDEZ BOIZÁN, Maikel**
**11130 Chiclana de la Frontera (Cádiz) (ES)**

• **ARBIB, Zouhayr**
**29649 Mijas (Málaga) (ES)**

(74) Representative: **Ungria López, Javier**
**Avda. Ramón y Cajal, 78**
**28043 Madrid (ES)**

(56) References cited:
**EP-A1- 3 009 408     WO-A1-2021/118365**

• **MAHMOUD ET AL.: "Anaerobic sewage treatment in a one-stage UASB reactor and a combined UASB-Digester system", WATER RESEARCH, 2004, XP004508325,**

**Description**

**FIELD OF THE INVENTION**

This invention relates to the treatment of wastewater, specifically to upflow anaerobic sludge bed (UASB) reactors, more specifically to pulsating UASB reactors as in patent EP 3009408 A1, and more particularly to UASB reactors for psychrophilic treatment of municipal sewage, combined with anaerobic digesters.

**BACKGROUND OF THE INVENTION**

The implementation of direct anaerobic treatment of raw (unsettled) municipal wastewater in countries with temperatures below 20°C, and more specifically with sub-mesophilic temperatures (≤15°C) is an ongoing challenge for researchers in the field of environmental engineering and technology. Such a successful use of psychrophilic anaerobic reactor would be of great economic importance because, in general (depending on the temperature of the wastewater), a significant amount of energy is required to bring the wastewater temperature up to the mesophilic temperature (higher than 20°C) and preferably up to the optimal mesophilic range (30-40°C). This puts a heavy burden on the economy of the wastewater system.
Three technologies can be considered the prior art in this field:

    1. Imhoff tank with a separator and a psychrophilic digester (without UASB);
    2. Pulsating UASB (such as patent EP 3009408 A1) with separator and UASB (without digester); and
    3. Two stages UASB-digester device, comprising separator, UASB and mesophilic digester.

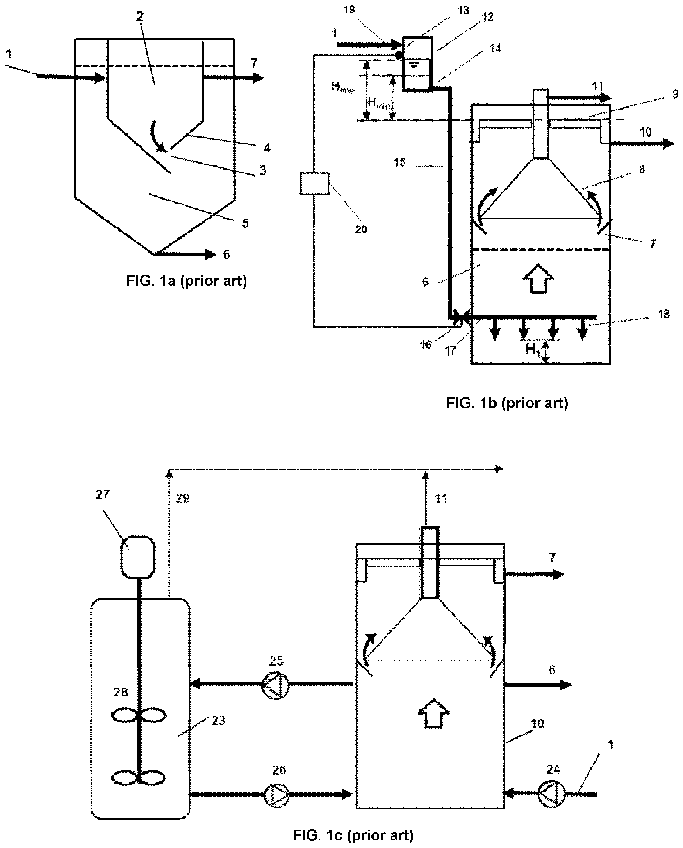

1. Imhoff Tank (FIG. 1a, state of the art)

The Imhoff Tank consists of an upper section known as the sedimentation chamber, and a lower section known as the sludge digestion compartment (see simplified process diagram in Fig. 1 state of the art). Forward flow enters the sedimentation chamber. The settling of solids occurs in the upper sedimentation chamber and digestion of the gradual flow of solids in the lower chamber, wherein solids accumulate and slowly digest. The two chambers are separated by a baffle sloping partition that contains narrow slots through which the solids passed into the lower chamber. By design, gas and scum are prevented from entering the sedimentation chamber due to the narrow slots that disallow gas and sludge particles from entering the sedimentation chamber that "stir up" solids as was learned from the septic tank.
Imhoff Tanks were an acceptable form of wastewater treatment used in both small and large wastewater treatment facilities during wastewater plant design in the early and mid-1900's up. The main advantage of this type of tank over the septic tank is that sludge is separated from the effluent, which allows for more complete settling and digestion. When operated properly, these systems are capable of removing 30 to 60 percent of the suspended matter, and from 25 to 40 percent of the biological oxygen demand (BOD). Imhoff Tanks proved to be better suited for small treatment applications rather than large. The demise of the Imhoff Tank was a result the inability to meet today's more stringent performance requirements. The main problem of the Imhoff tank is a low efficiency in organic matter removal, from 25 to 40 percent of the BOD as there is not an anaerobic treatment of the wastewater, just a primary clarification.

2. Pulsating UASB (Fig. 1b, state of the art: patent EP 3009408 A1).

One of the major successes in the development of anaerobic wastewater technology was the introduction of high-rate reactors in which biomass retention and liquid retention are uncoupled, as the well-known Upflow Anaerobic Sludge Bed (UASB) reactors. There are several types of full scale-reactors operated all over the world, as for example the one described in U.S. patent No 4,253,956.
The UASB bioreactor design has long been considered as the most appropriate anaerobic system to treat municipal wastewater because of the simplicity, low investment and operation costs thereof and previous positive experience in the treatment of a wide range of wastewater types. In tropical regions, the UASB bioreactor configuration is reported to be the most commonly used process for anaerobic municipal wastewater treatment. Hundreds of UASB systems for the treatment of sewage have been commissioned in several tropical countries such as India, Colombia, Brazil, and Mexico. The ambient temperature in these countries is relatively high throughout the year (20-35°C), permitting Anaerobic Digestion (AD) of sewage to proceed in the mesophilic temperature range without process heating. However, experience with one-stage UASB systems for raw sewage under sub-mesophilic temperatures has provided limited success at full-scale uses, mainly due to two low internal mixing intensities. To solve these problems some essential improvements were made in the conventional design of UASB reactors in patent EP 3009408 A1 (developed by the same authors of the present invention) to permit their use for unsettled sewage under sub-optimal temperatures. The system increases the biomass and substrate contact by an injection and mixing device which comprises a wastewater feeding tank, located outside the reactor and above the reactor water level for generating pulses by gravity.

The problem of the Pulsating UASB reactor is that the performance at low temperature (<15°C) and/or showing strong fluctuations of temperatures, changing from sub-mesophilic conditions to mesophilic conditions (for instance, between summer and winter seasons (fluctuations of 5°C-15°C over a mean temperature) has limited hydrolysis, i.e., is highly limited by the hydrolysis of entrapped solids (particulate organic matter), which accumulate in the sludge bed when high loading rates are applied, resulting in deteriorating of the reactor performance and low removal efficiency. Consequently, the amount of excess sludge increases, leading to a lower sludge retention time (SRT), which might then limit the growth of methanogens resulting in a poor soluble chemical oxygen demand (COD) removal and thus deterioration of sludge stability and biogas production.

3. Two-stage UASB-digester device (FIG.1c, state of the art)

In the Mediterranean countries, the ambient temperature fluctuates between winter and summer, resulting in a change in the sewage temperature from 15°C to 25°C, respectively (20°C±5°C). Moreover, sewage is often concentrated with a high fraction of suspended solids. As explained above, the performance of one-stage UASB reactors at low temperature climates (between 5-15°C) is highly limited by the hydrolysis of entrapped solids, which accumulate in the sludge bed. Mahmoud et al. (Anaerobic sewage treatment in a one-stage UASB reactor and a combined UASB-Digester system, Water Research, 2004) investigated a UASB-digester system for low temperature municipal wastewater treatment. This system treats wastewater in a UASB reactor at a short hydraulic retention time (HRT). The UASB sludge is recirculated to a separated, external digester that is heated, wherein the wastewater suspended solids, captured in the UASB reactor are converted to methane. Then, the stabilized digested sludge is removed from the digester and returned to the UASB reactor where it continues to capture wastewater organic solids and at the same time supplies methanogenic biomass to the UASB reactor for conversion of the soluble COD in the wastewater. This is a two-stage UASB-digester system that provides excellent soluble COD removal with a low excess sludge production even when operating at low HRT, but there are various drawbacks to solve in this process:

1) High energy consumption: pumping recirculation of the UASB sludge to the digester and from the digester to the UASB consumes energy;
2) limited efficiency of the process: electromechanical pumping recirculation of the UASB sludge to the digester and from the digester to the UASB breaks granules of the sludge, reducing the efficiency of the process;
3) high maintenance costs related to the electromechanical equipment results in high maintenance costs;
4) higher footprint of two separated reactors when compared with a single UASB reactor;
5) very limited mixing in the UASB when operating at low temperatures;
6) high energy consumption for anaerobic digester heating to mesophilic range; and
7) loss of biomass: wash out of the biomass during peak flows at short HRT.

Taking the above-commented drawbacks into consideration, the present invention provides a very profitable one-stage system for treating unsettled sewage in a sustainable way, specially under sub-mesophilic temperatures (i.e., at low temperatures: ≤15°C) and/or more specially for unsettled sewage showing changes from sub-mesophilic conditions to mesophilic conditions over time, due to strong fluctuations of temperature (for instance between summer and winter or due to any other change in weather conditions or the conditions of the wastewater). It should be taken into account that, working under sub-mesophilic temperatures is just a challenge in the technical field of wastewater treatment, because the biological activity is lower at that weather conditions. However, the biggest challenge for any one skilled in the art is the fluctuation of temperatures between summer and winter, not only because of the thermal impact in the process but also because the diversity of the microbial community that grow up at low temperatures has a different composition than the one those that grow up at high temperatures, and there is not any known system in the field showing the flexibility that would be needed for adapting to the process from one conditions to the others.

**SUMMARY OF THE INVENTION**

The present invention, according to claim 1, is directed to a one-stage device for treating wastewater, such as unsettled sewage, essentially made of a combination of a UASB reactor with a digester, comprising a partition element dividing and connecting each other. "One-stage" should be understood as a device capable of treating wastewater simultaneously with the sludge generated in the process in just one single tank, i.e., in only one combined stage.

The sewage has more preferably under sub-mesophilic temperature (≤15°C) and/or shows changes over time between sub-mesophilic conditions (≤15°C) to mesophilic conditions (>15°C) due to significant fluctuations of temperatures. "Strong" or "significant" fluctuations means a fluctuation ranging from ±7.5°C in relation to a mean temperature;

i.e., the mean temperature can be any temperature equal or below 15°C or higher than 15°C, for instance 20°C, in such a way that the temperature of the sewage can vary over time between 12.5°C to 27.5°C.

To improve the systems of the prior art, the one-stage device combines a pulsating UASB reactor with a non-heated solids anaerobic digester located at the lower part of the UASB reactor (i.e. below the reactor, in the shape of a "tower"). "Non heated" should be understood as "in the absence of heating means (for the solids)", i.e., the digester is configured to work at an ambient temperature, which is the temperature of the wastewater flow to be treated, without the need of external/extra heat. This way, the sludge produced during the process inside the UASB reactor is recirculated downwards to the (non-heated) digester located below, wherein the wastewater suspended solids captured in the UASB reactor are subsequently converted to methane.

The present invention thus essentially refers to a one-stage device for treating unsettled sewage through a combined UASB reactor-anaerobic digester action, comprising:

- a tank or container divided in two chambers, wherein

  ∘ a first chamber is in the upper section of the tank (also named upper chamber), and it is a UASB reactor chamber having a sludge bed at the lower part of the chamber, a three-phase separator at the upper part of the chamber, and an external pulse wastewater injection and mixing device having a feeding tank, configured to feed and mix the UASB reactor chamber by pulses, making the influent pass through the sludge bed of the UASB reactor chamber; and

  ∘ a second chamber is in the lower section of the tank and it is a non-heated anaerobic digester chamber (i.e., in the absence of heating means for the sewage), which is located at the bottom of the tank, i.e., below the UASB reactor chamber, and is configured to receive and hydrolyze the entrapped solids which accumulate in the sludge bed of the upper UASB reactor chamber;

wherein both chambers are divided by and connected through

- at least one baffle sloping partition, configured to separate the upper UASB reactor chamber from the lower anaerobic digester chamber, and to collect biogas generated in the anaerobic digester chamber and the sludge generated in the UASB reactor chamber; and
- means for recycling sludge from the anaerobic digester chamber to the UASB reactor chamber, comprising: a gas-lift pump, a gas-sludge separator, and a sludge recycling pipe. The gas-lift pump elevates the sludge from the anaerobic digester chamber to the gas-sludge separator, with the energy provided by the biogas produced in the digester chamber, and the sludge recycling pipe sends the sludge from the gas-sludge separator to the pulse feeding tank by gravity;

and wherein the pulse wastewater injection and mixing device of the UASB reactor chamber is also configured to agitate/mix the anaerobic digester chamber, comprising two valves that alternatively let the flow of wastewater and sludge pass from either the feeding tank to the UASB reactor chamber or from the feeding tank to the anaerobic digester chamber; also comprising by-pass means to (alternatively) inject the flow of wastewater and sludge from the feeding tank of the external pulse wastewater injection and mixing device directly to the three-phase separator (i.e., without passing the influent through the sludge bed of the UASB reactor), comprising: a UASB by-pass pipe and a valve, to operate the UASB reactor as an Imhoff tank, i.e., as a sedimentation chamber for the sewage and an anaerobic digester for the solids, avoiding biomass wash out when there are flow peaks (e.g., episodes of rain). The one-stage device also comprises control means (20) that act closing or opening the valves.

The one-stage combined reactor-digester device having a slope partition is preferably configured to treat unsettled sewage at low temperatures (≤15ºC) also named as sub-mesophilic temperatures, and/or unsettled sewage showing strong fluctuations of temperatures, regardless the ambient temperature (it can be sub-mesophilic or mesophilic temperatures) as defined above, mainly because of weather conditions, for instance changes between summer and winter.

The claimed device provides optimal rates of wastewater treatment. The main advantages of the present invention are:

• providing an implemented UASB reactor that works as a one-stage system, optimizing the soluble COD removal and the hydrolysis of entrapped solids accumulated in the sludge bed, and that it results in low excess sludge production;

• providing a low maintenance cost device such as the Imhoff tank as well as pulsating UASB reactors, avoiding the use of the electromechanical equipments needed to connect the UASB reactor and the digester in the prior art (pumps, mixers, etc);

- enabling the use of granular biomass, thus increasing the efficiency of the process, avoiding the use of electromechanical pumps commonly used in prior art UASB-digester devices which cause the breakage of granules;
- lowering the footprint in one single vessel as Imhoff tanks and pulsating UASB do, instead of two connected devices as in prior art UASB-digester;
- carrying out the full process at sub-mesophilic temperature range, removing energy consumption of heating the anaerobic digester as in prior art UASB-digester devices; and
- operating as an Imhoff tank during peak flows to avoid biomass wash out.

In all, the device can work either as a UASB reactor, or as a digester, or as an Imhoff tank, having the following additional advantages:

- solid-liquid separation and sludge stabilization are combined in one single unit;
- resistant against organic and peak flows;
- it has no moving parts/electromechanical equipment, i.e., mechanical mixers, pumps, etc.;
- it offers at this time, a good solution to solids handling and digestion;
- provides a non heated anaerobic digestion, i.e., there is no need of heating means for the sludge, and the process can be carried out at the ambient temperature of the inflow, even if it is a low temperature ($\leq$15°C); and
- low operating costs.

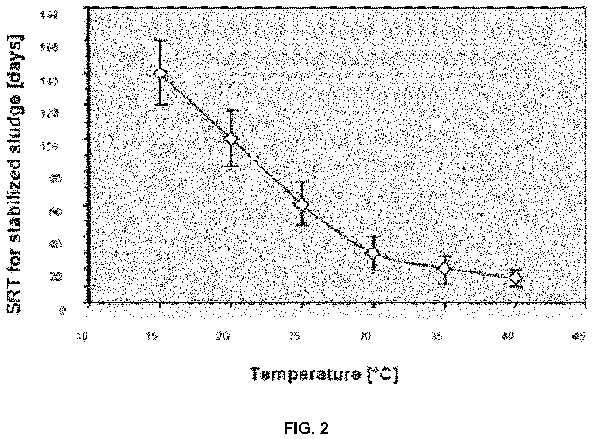

The minimum solid/sludge retention time (SRT) required for hydrolysis is the prime design criterion (Figure 2, state of the art - Reference: Environmental Anaerobic Technology, pp. 59-89 (2010) Anaerobic Sewage Treatment using UASB Reactors: Engineering and Operational Aspects Jules B. van Lier *et al.),* being directly linked to the amount, viable, active biomass and the capability of the reactor to hydrolyze the entrapped solids which accumulate in the sludge bed.

The SRT of the UASB bioreactor is estimated from the average sludge production per m$^3$ UASB reactor volume per day ($dX_{AVG}/dt$) and the average concentration of the sludge blanket ($X_{AVG}$) of the module over the total height (UASB):

$$SRT_{UASB} = X_{AVG} / (dX_{AVG}/dt)$$

The average sludge production per m$^3$ reactor per day ($dX_{AVG}/dt$) is calculated by:

$$dX_{AVG}/dt = P_{wastewater,\ VSS} / HRT\ (kg/(m^3.day))$$

in which:

· HRT = hydraulic retention time in UASB reactor (days)

The organic sludge production per m$^3$ wastewater ($P_{wastewater,\ VSS}$) can be calculated based on conversion of biodegradable COD (BCOD) and accumulation of solids in the sludge bed:

$$P_{wastewater,\ TSS} = Y_{TOT} * BCOD_{removed} + TSS_{removed} * (1-(A_{IN}/100)) * (1-Z/100)) +$$
$$TSS_{removed} * (A_{IN}/100)\ (kg/m^3)$$

in which:

· $Y_{TOT}$ is the yield coefficient for the conversion of BCOD into bacteria (kg VSS/kg BCOD) $TSS_{removed}$ is removed solids per m$^3$ of wastewater (kg/m$^3$)
· $A_{IN}$ is the ash percentage of the wastewater solids (%)
· Z is the percentage of the VSS in the wastewater that is degraded during its stay in the UASB reactor.

In the case of the present invention, the sludge produced in the UASB reactor chamber has an additional SRT in the non-heated anaerobic digester chamber, which is added to the partial SRT of the UASB reactor chamber to obtain the total SRT required:

$$SRT_{total} = SRT_{UASB} + SRT_{digester}$$

It was obtained that, to reach the minimum SRT required for hydrolysis treating common municipal wastewater at temperatures described in the present document, the anaerobic digester chamber preferably has an effective volume ranging from 40% to 60% of the total volume of the entire tank (i.e. combining the volume of the upper section or chamber and the lower section or chamber of the device). This way, the invention provides a sludge retention time higher than 140 days in the total system when temperatures are equal to or lower than 15°C (understood as "low or sub-mesophilic temperatures" in the scope of the invention). This technical result is the key factor for determining the location of the baffles that divide the tank in two parts and separate the UASB reactor chamber from the digester chamber. This long retention time for solids, from 140 days to one year, together with the additional non-heated digestion process provided by the digester and the sludge recirculation from the digester chamber to the UASB reactor chamber promote a great diversity of stable microbial communities, both sub-mesophilic and mesophilic, and as a consequence, a fast, improved adaptation to temperature fluctuations during the whole year. This is a key factor of the functioning of the claimed device.

The upper section of the tank disclosed in the present invention, which is the UASB reactor chamber, is as defined and known in the prior art by anyone skilled in the field of water treatments, such as urban wastewater treatments. For instance, it is known that standard UASB reactors usually comprise a granular or flocculent fluidized/expanded sludge bed, a three-phase separator, a digester having deflectors at the top thereof, such as baffles, a gas collector and effluent weirs for the outlet of the wastewater overflows, among other elements. Preferably, the reactor chamber of the present invention comprises a granular or flocculent fluidized sludge bed.

As already disclosed, this UASB reactor chamber comprises a wastewater injection and mixing device configured to feed the UASB reactor chamber by pulses. That is to say, it is a pulsating UASB reactor type. In the most preferred embodiment, the UASB reactor chamber is equal to the reactor disclosed in patent EP3009408 A1, wherein it comprises a wastewater injection and mixing device configured to feed the UASB reactor by pulses ("*UASB feeding*" mode) as described in said patent. This preferred influent, non-pressurized wastewater injection and mixing device for treatment of unsettled sewage in UASB reactors comprises:

-    an external wastewater feeding tank, located outside the UASB reactor chamber and above the reactor water level, having an effective wastewater volume for generating pulses by gravity ranging from 0.5% to 1.5% of the total reactor chamber volume, said effective volume inside the tank being at a height between a minimum wastewater level $H_{min}$ equal or higher than 0.5 m and a maximum wastewater level $H_{max}$ equal or lower than 2.5 m above the water level of the reactor, $H_{max}$ being always higher than $H_{min}$ for producing the hydraulic energy of the pulse; and the feeding tank having an upper inlet as well as an outlet at the bottom for the wastewater; and being connected to the reactor chamber through
-    an inlet manifold, that at one end connects downwards the outlet of the feeding tank with
-    one or more wastewater distribution strings at a second end, each distribution string having a valve automatically controllable by the effective wastewater level inside the feeding tank, the string or strings being buried in the sludge bed inside the reactor chamber for distributing the wastewater pulses to the lower part of the reactor chamber through
-    injection nozzles having a downwards discharge point located at a height of between 200 and 300 mm from the lower part of the reactor chamber to avoid dead zones and energy losses, and
-    a water level sensor for measuring the minimum effective wastewater level $H_{min}$ and the maximum effective wastewater level $H_{max}$ inside the (external) feeding tank, capable of sending a signal to control means that acts closing or opening the valve.

The distance at which the discharge point of the injection nozzles is located with respect to the bottom of the sludge bed inside the reactor chamber significantly contributes to the way in which the injection device promotes a fluidized/expanded sludge bed, thus improving the sludge-wastewater contact. The distance depends on the size of the reactor chamber and on the whole design of the injection device. In a preferred case, said discharge point is at a height of between 200 and 300 mm from (above) the bottom of the reactor chamber.

Besides, the density of nozzles, i.e. the number of nozzles at the string/s also varies depending on the size of the reactor chamber; in a preferred embodiment the number is calculated to obtain a density of 1 nozzle per 4-5 m$^2$ reactor chamber surface area (i.e., in a preferred case the injection device comprises 1 nozzle per 4-5 m$^2$ reactor chamber surface area); this is a significant lower density when compared with conventional UASB reactors, due to higher discharge flows. Besides, the diameter of the nozzle is calculated to obtain a proper outlet velocity of wastewater. For instance, in a preferred embodiment, the diameter of the nozzle permits an outlet velocity of 3-5 m/s, high enough to avoid clogging at the point of discharge thereof.

Thanks to said configuration of the injection and mixing device of wastewater inside the reactor chamber, the feeding tank accumulates hydraulic energy in the form of what is named *effective wastewater volume,* which is a partial, specific volume of the total volume of the feeding tank that determines the amount of water of a pulse generated when the automatic valve is open. The effective volume inside the feeding tank, that must range between 0.5% and 1.5% of the total volume of the reactor chamber, is defined by an upper (maximum) effective wastewater level $H_{max}$ and a lower (minimum) effective wastewater level $H_{min}$, in such a way that the hydraulic energy (effective volume) is released in the form of pulses of wastewater and said pulses flow downwards through the inlet manifold by draining it with the automatic valves that are open when the effective volume inside the feeding tank reaches a specific maximum height or level ($H_{max}$) up to 2.5m above the water level inside the reactor chamber. On the contrary, the pulse of wastewater flow ends when the effective volume of the wastewater inside the feeding tank reaches a minimum height or level $H_{min}$ never lower than 0.5m above the water level inside the reactor chamber. That is to say, the hydraulic energy of the wastewater pulse depends on the difference between the maximum height level and the minimum height level reached by the wastewater inside the tank that define the effective volume, both $H_{max}$ and $H_{min}$ are always different and never the same. The maximum height level reached by the effective volume of wastewater (that can also be named as "effective equalization volume") inside the feeding tank acts as a high level "alarm" that opens the valve for producing the wastewater pulse; at that moment, the effective volume is full. The $H_{max}$ preferably ranges from 1.5 to 2.5m above the reactor water level. The minimum height level acts as a "cut in" level that closes the valve, since at that moment no effective volume remains inside the tank, and the tank needs to be refilled; the $H_{min}$ preferably ranges from 0.5 to 1.5m above the reactor chamber water level.

In a particular, preferred embodiment of the invention, the injection device comprises means for measuring the minimum and maximum effective wastewater levels inside the feeding tank, that automatically controls the valve or valves, i.e., opening or closing. Particularly, in a preferred case, the valve or valves are automatically controlled by means of a water level sensor that measures the effective water level inside the feeding tank (the minimum and the maximum levels) and sends a signal to control means (for instance, PLC o Programmable Logic controller, which may comprise a transmitter and a controller) which acts on the valve, particularly the water level sensor measures the wastewater level inside the feeding tank and sends a signal to the control system for automatically closing the valve when the effective water level reaches $H_{min}$, and for automatically opening the valve when the water level reaches $H_{max}$. i.e., it is possible that only one water level sensor is included in the injection and mixing device for measuring both, the minimum effective level and the maximum effective level. Nevertheless, a first and a second level sensor can also be used for measuring the minimum level and the maximum level, respectively. The level sensor can be located either inside or outside the feeding tank for measuring the wastewater level.

In the case of the present invention, the wastewater injection and mixing device is adapted to mix both, the UASB reactor chamber at the upper section of the tank and the digester chamber at the lower section of the tank, but not at the same time; it is also clear that said device is configured to feed only the reactor chamber but not the digester chamber. To operate this way, the influent, non-pressurized wastewater injection and mixing device disclosed in patent EP3009408 A1 also comprises, in the case of the present invention:

- an inlet manifold, connected to the outlet of the feeding tank at one end and to
- a digester distribution string at the other end; said string connecting
- an automatic valve outside the digester chamber with the inside thereof, and being buried in
- a sludge bed of the anaerobic digester chamber, located at the lower part of said digester chamber (i.e. above the bottom thereof); and also having
- injection nozzles that form part of the digester distribution string and that are located at a height of between 200 and 300 mm from the bottom of the anaerobic digester chamber.

All the specifications disclosed for the strings, nozzles, valves and other elements of the reactor chamber are also equivalent and applicable to those of the strings, nozzles, valves and other elements of the digester chamber.

The at least one baffle sloping partition comprised in the combined UASB reactor-digester device is configured to a) divide the tank of the device in two chambers: an upper UASB reactor chamber (in the upper section of the tank) and a lower anaerobic digester chamber (located in the lower section of the tank), while b) allowing the recirculation of solids and sludge between the two chambers, and also c) to collect the biogas produced inside the digester chamber. In a particular embodiment, the device comprises only one baffle sloping partition made of a pair of baffles, which separate the chambers: a first baffle attached to a sidewall of the main chamber and confronted with a second baffle, which is longer than the first baffle (preferably 0.2 to 0.5 m longer), and that is attached to the opposite sidewall of the chamber, both baffles being sloped downwards with respect to the perpendicular plane of the axial axis. The slope of the baffles has an angle ranging from 50° and 60° with respect to the perpendicular plane of the axial axis, and having a separation at the lower part of the baffles (preferably, between 0.1 to 0.3 m distance) which configures an opening to enable the solids and sludge to settle. This way, the solids and sludge generated inside the UASB reactor chamber fall down to the anaerobic digester through such opening formed between the two baffles, reaching to a recirculation from the UASB reactor chamber to the anaerobic digester chamber. At the same time, as one baffle is longer than the opposite, the biogas produced in the digester chamber is held and cannot enter the UASB reactor chamber, thus said biogas being collected by the gas-lift pipe of the gas-lift means.

In another particular embodiment, the device comprises more than one baffle sloping partition, i.e., multiple baffle sloping partitions, each one made of a pair of baffles having the same slope as the one discloses in the previous embodiment. In each pair of baffles, one baffle is larger than the other, as commented before, and each pair of baffles is attached to the opposite. The number of pairs of baffles depends on the size and dimensions of the device tank. The larger the number of pairs of baffles, the lower the high of said baffles, thus the reactor chamber can be lower, and the cost is reduced.

The at least one pair baffle slope partition is located in such a position of the device (i.e. in such a height of the tank) for the lower anaerobic digester chamber to have an effective volume ranging from 40% to 60% of the total volume of the combined one-stage UASB-anaerobic digester device (i.e. of the tank). To achieve this effective volume, the slope of the pair of baffles ranges from 50° to 60° with respect to perpendicular plane of the axial axis, thus resulting in an effective volume of the total volume of the entire device ranging from 40%to 60%.

The sludge recycling means comprises a gas-lift pump (also called air-lift pump in the scope of the present invention), a gas-sludge separator and a sludge pipe configured to send the sludge from the digester chamber to the pulse feeding tank. The gas-lift pump operates with the biogas generated in the anaerobic digester chamber, which is collected by the at least one pair of baffle slope partition, specifically thanks to the difference is size between the first and the second baffles as explained before. The biogas is conducted by the baffle slope partition to the lower part of the sludge pipe, which transports the sludge. By buoyancy the biogas, which has a lower density than the sludge, rises (quickly). By fluid pressure, the sludge is taken in the ascendant biogas flow and moves in the same direction as the biogas. This way, after the anaerobic digestion process is carried out inside the digester chamber, the sludge from said anaerobic digestion is sent back to the UASB reactor chamber through the sludge recycling system.

Certain types of wastewater result in granulated sludge, which are beneficial for increasing the treatment rates. When granules are present in the sludge bed of the reactor chamber, said granules fall down to the digester through the baffle partition, and later on the gas-lift pipe elevates the granules inside the anaerobic digester chamber without damaging them, unlike mechanical pumps. Thanks to said sludge recycling system, the stabilized sludge is returned from the anaerobic digester chamber to the UASB reactor chamber, wherein such sludge continues to capture wastewater organic solids, and at the same time such sludge supplies methanogenic biomass to the UASB reactor chamber for conversion of the soluble COD in the wastewater.

The by-pass means comprises a flow meter sensor located at the inlet pipe for measuring the influent flow; a UASB by-pass pipe and a UASB by-pass valve. The flow meter is configured to detect peak flows of influent wastewater and send a signal to control means configured to close the feeding valve of the UASB reactor chamber (that connects to the distribution string) and open the UASB by-pass valve which communicates directly the pulse feeding tank to the three-phase separator of the AUSB reactor chamber located at the upper part thereof. This by-pass means allows the system to operate as an Imhoff tank in a continuous feeding mode, without pulses, i.e., avoiding biomass wash out when there are peak flows, e.g., episodes of rain (that significantly increases the inlet flow).

The present invention is also directed to a method for the treatment of unsettled sewage by using the UASB reactor-digester combined device of the present invention, wherein said method comprises:

a) feeding the UASB reactor chamber and generating a pulse ("UASB feeding mode", as the state-of-the-art device of EP3009408 A1) by:

a.1) feeding the tank of the wastewater injection and mixing device with a flow of wastewater and with sludge generated inside the UASB reactor chamber and digested in the anaerobic digester chamber, fed into the UASB reactor chamber through the recycled sludge pipe;

a.2) automatically opening (only) the feeding reactor chamber valve, while the UASB by-pass valve and the digester mixing valve are closed, by means of the water level sensor for measuring the minimum effective wastewater level $H_{min}$ and the maximum effective wastewater level $H_{max}$ inside the feeding tank, that sends a signal to the control means of the feeding reactor chamber valve when the effective volume inside the feeding tank reaches the maximum level $H_{max}$ to generate a pulse of flow of wastewater by gravity that passes through the inlet manifold that connects the outlet of the feeding tank with the distribution string, thus injecting said pulse of wastewater into the sludge bed reactor chamber;

a.3) distributing the pulse of wastewater from the distribution string to the bottom of the sludge bed of the reactor chamber through the injection nozzles, by gravity; and

a.4) automatically closing the feeding reactor chamber valve by means of the water level sensor that sends a signal to the control means when the effective volume inside the feeding tank reaches the minimum level $H_{min}$ to cut the pulse;

b) mixing the anaerobic digester chamber ("digester mixing mode") by pulse, by:

b.1) feeding the tank of the wastewater injection and mixing device with a flow of wastewater, and with the sludge generated inside the UASB reactor chamber and digested in the anaerobic digester chamber, fed into the UASB reactor chamber through the recycled sludge pipe;

b.2) automatically opening the anaerobic mixing valve, while the UASB reactor by-pass valve and UASB reactor feeding valve are closed, by means of the water level sensor for measuring the minimum effective wastewater level $H_{min}$ and the maximum effective wastewater level $H_{max}$ inside the feeding tank, that sends a signal to the control means of the anaerobic mixing valve when the effective volume inside the tank reaches the maximum level $H_{max}$ to generate a pulse of flow of wastewater by gravity that passes through the inlet manifold that connects the outlet of the feeding tank with the digester distribution string, thus injecting said pulse of wastewater and sludge into the anaerobic digester chamber;

b.3) distributing the pulse of wastewater and sludge from the anaerobic distribution string to the bottom of anaerobic digester chamber through the injection nozzles, by gravity; and

b.4) automatically closing the digester mixing valve by means of the water level sensor that sends a signal to the control means when the effective volume inside the feeding tank reaches the minimum level $H_{min}$ to cut the pulse.

It is clearly derived from the reading of this text for any skilled in the art, that feeding the tank of the wastewater injection and mixing device with sludge generated inside the UASB reactor chamber and digested in the anaerobic digester chamber is only be possible once the sludge in the USAB reactor chamber is produced and then falls down to the digester chamber to be digested.

In a preferred embodiment, the step b), which results from closing the feeding reactor chamber valve and opening the anaerobic digester chamber mixing valve, is activated from once every two hours to once and hour. Preferably, the water level sensor is controlled by control means (Programmable Logic Controller) that switches from one pulse to another, i.e. "*UASB feeding*" mode, "UASB by-pass" mode or to "*anaerobic digester mixing*" mode.

In a third optional mode ("UASB by-pass" mode), the system operates as an Imhoff tank, i.e., as a sedimentation chamber for the sewage and an anaerobic digester for the solids, because the influent wastewater is not passed through the sludge bed of the reactor chamber but to the three-phase separator located at the upper part of the UASB reactor chamber, comprising the following steps:

c.1) feeding the tank of the wastewater injection and mixing device with a flow of wastewater and with the sludge generated inside the UASB reactor chamber and digested in the anaerobic digester chamber, fed into the UASB reactor chamber through the recycled sludge pipe;

c.2) Measuring the influent flow by a flow meter sensor, configured to send a signal to control means when an influent peak flow is detected for opening the UASB by-pass valve while closing the feeding reactor chamber valve and the digester chamber mixing valve;

c.3) distributing the flow of wastewater and sludge from the feeding tank directly to the three-phase separator at the upper part of the UASB reactor chamber, by the UASB by-pass pipe.

Thanks to said alternative embodiment, the three-phase separator located at the upper part of the UASB reactor chamber operates as a sedimentation chamber which separates from one part the solids and sludge which fall through the sludge bed and the at least one baffle sloping partition down to the anaerobic digester chamber, and on the other part the clarified effluent with the water overflow weir.

The "UASB by-pass" mode operates without pulses in a continuous feeding mode by gravity.

## BRIEF DESCRIPTION OF THE DRAWINGS

**Figure 1a (Prior art)** Imhoff tank as described in background of the invention. This system would be similar to the second chamber at the bottom part of the device tank of the present invention.

(1) Influent wastewater
(2) Separator (settling separator)
(3) Baffle opening
(4) Baffle sloping partition
(5) Anaerobic digester
(6) Waste sludge
(7) Effluent

Influent wastewater (1) enters an upper section known as the settling separator (2), and a lower section known as the anaerobic digester (5) compartment. The settling of solids occurs in an upper chamber (2) and digestion of the solids in the lower chamber (5). The two chambers are separated by a baffle sloping partition (4) that contains narrow baffle openings (3) through which the solids passed into the lower chamber. Solids settle out in the upper sedimentation chamber (2) and gradually flow into the lower digestion chamber (5). In the digestion chamber (5), solids accumulate and slowly digest. By design, gas and scum are prevented from entering the sedimentation chamber due to the narrow baffle openings (3) that disallow gas and sludge particles from entering the sedimentation chamber that "stir up" solids. The line having normal thickness illustrates the elements of the device; the line with high thickness illustrates the flow of wastewater; and the dash line illustrates the water level inside the digester.

**Figure 1b (Prior art)** illustrates a schematic representation of the Upflow Anaerobic Sludge Bed type reactor (UASB reactor), as in patent EP 3009408 A1, with the influent wastewater injection and mixing device. This system would be similar to the first chamber at the top part of the device tank of the present invention.

(1) Influent wastewater
(7) Effluent
(8) Three-phase separator
(9) Water overflow weir
(10) UASB reactor
(11) Pipe for biogas from UASB
(12) Pulse feeding tank
(13) Inlet
(14) Outlet
(15) Inlet manifold
(16) Feeding reactor valve
(17) Reactor Distribution string
(18) Reactor Injection nozzles
(19) Level sensor
(20) Valve level control
(21) Sludge bed
(22) Baffle

Figure 1b shows a UASB reactor (10) fed with an influent wastewater flow (1) and having a particular external influent wastewater injection and mixing device, used in an anaerobic reactor of the USAB type to fluidize the sludge bed (21) with unsettled sewage and working under sub-mesophilic temperatures. The wastewater injection and mixing device comprises a feeding, pulsed and non-pressurized tank (12). The tank (12) is fed with a flow of wastewater (1) through an inlet (13) located at the top side thereof, usually by pumping the flow (1). Wastewater is accumulated in the tank (12) until it reaches a maximum height $H_{max}$ inside the tank. Then a valve (16) is automatically controlled by a non-contact water level sensor (19) which is connected to control means (20) (Programmable Logic Controller), in such a way that a flow of wastewater in the form of a pulse with a volume equal to the effective volume accumulated inside the tank is generated by gravity through an inlet manifold (15) that connects at one end the outlet (14) of the feeding tank (12) with a distribution string (17) at the other end by means of the valve (16), said valve (16) letting the wastewater pulse pass through it and enter the reactor. The distribution string (17) connects the automatic valve (16) outside the reactor with the inside thereof, being buried in the sludge bed (21). The wastewater pulse is then injected from the distribution string (17) to the bottom of the reactor through injection nozzles (18) that form part of the distribution string (17) and that are located above the lower part of the reactor (i.e., the bottom part of the sludge bed (21)). The valve (16), automatically controlled by the water level sensor (19), closes when the wastewater level inside the feeding tank (2) reaches a lower height $H_{min}$ above the water level inside the reactor and always being above the outlet of the feeding tank entrance (14) to avoid the entrainment of air bubbles in the reactor. The pulses generated with such a device produces a flow in the inlet manifold (15) that is from 25 to 80 times higher than the influent wastewater flow (1), thus creating enough energy to expand the bed (21) by gravity.

The rest of the configuration shown in Figure 1b is identical to conventional UASB reactors, the reactor further comprises the cited granular or flocculent fluidized/expanded sludge bed (21), a conventional deflector (22), such as baffles; a three-phase separator (8), effluent weirs (9) for the outlet of the effluent (i.e. flow of treated water (7)), and a gas collector for the biogas flow (11). This way, the wastewater injected with the claimed device passes up through the sludge bed (21), and then the biomass, the treated water (effluent) and the biogas are separated at the top of the digester by a conventional deflector, i.e. the effluent weirs (9) and the three-phase separator (8). That is to say, the flow of gas (11) is collected, the biomass settles back to the active volume of the reactor while the flow of treated water (7) leaves the reactor through an effluent outlet since the water overflows through weir/s (9).

The line having normal thickness illustrates the elements of the device; the line with high thickness illustrates the flow of wastewater; and the dash line illustrates the water level inside the reactor.

**Figure 1c (Prior art)** Two-stage UASB-digester as described in background of the invention.

(1) Influent wastewater
(6) Waste sludge
(7) Effluent
(10) UASB reactor
(11) Pipe for biogas from UASB
(23) 35°C heated anaerobic digester
(24) Influent pump
(25) Sludge recycling pump from UASB
(26) Sludge recycling pump from digester
(27) Mechanical mixer
(28) Blades
(29) Pipe for biogas from digester

This system treats wastewater inlet flow (1) which enters in a UASB reactor (10) by a pump (24). The UASB sludge is recirculated over a 35°C heated digester (23) by an electromechanical pump (25) at where the wastewater suspended solids, captured in the UASB reactor (10) are converted to biogas (29). The stabilized digester sludge is returned to the UASB reactor by a pump (26) where it continues to capture wastewater organic solids and at the same time supplies methanogenic biomass to the UASB reactor (10) for conversion of the soluble COD in the wastewater to produce additional biogas (11) and a final treated effluent (7). A mechanical mixer (27) agitates the biomass in the heated anaerobic digester (23) with blades (28).

The line having normal thickness illustrates the elements of the device; the line with high thickness illustrates the flow of wastewater.

**Figure 2** Graphic representation of SRT (Solid/Sludge retention time) for stabilized sludge (days) vs. Temperature (°C). Minimum SRT required for Hydrolysis.

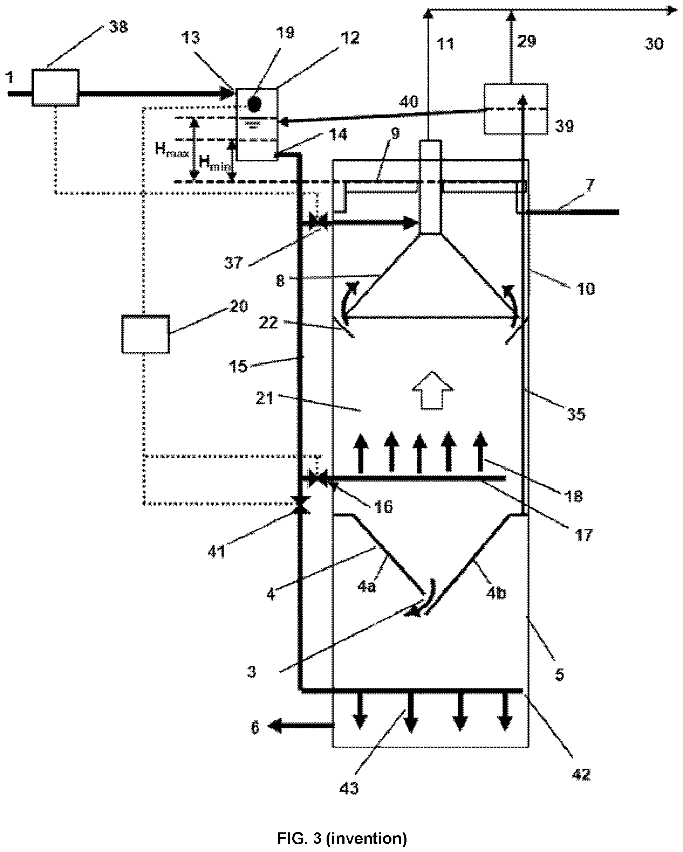

**Figure 3 (the present invention)** illustrates a schematic representation of a one-step device according to the Detailed description of the invention, comprising a tank having two chambers, one located on top of the other: an upper UASB reactor chamber and a lower non-heated anaerobic digester chamber located at the bottom thereof, both connected to each other by a baffle sloping partition. The line of the figure having normal thickness illustrates the elements of the device; the arrow having normal thickness illustrates the gas line; the thick line illustrates the flow of wastewater; the dash line illustrates the water level inside the tank; and the dot line illustrates the control signal between elements.

(1) Influent wastewater
(3) Baffle opening
(4) Baffle sloping partition
(4a) First baffle
(4b) Second baffle
(5) Anaerobic digester chamber
(6) Waste sludge
(7) Effluent
(8) Three-phase separator
(9) Water overflow weir
(10) UASB reactor chamber
(11) Pipe for biogas from UASB reactor chamber
(12) Pulse feeding tank
(13) Inlet
(14) Outlet
(15) Inlet manifold
(16) Feeding reactor valve
(17) Reactor Distribution string
(18) Reactor Injection nozzles
(19) Level sensor
(20) Valve level control
(21) Sludge bed
(22) Baffle

(29) Pipe for biogas from digester chamber
(35) Gas lift pump
(37) UASB by-pass valve
(38) Flow control
(39) Gas-sludge separator
(40) Sludge recycling pipe
(41) Digester mixing valve
(42) Digester Distribution string
(43) Digester Injection nozzles

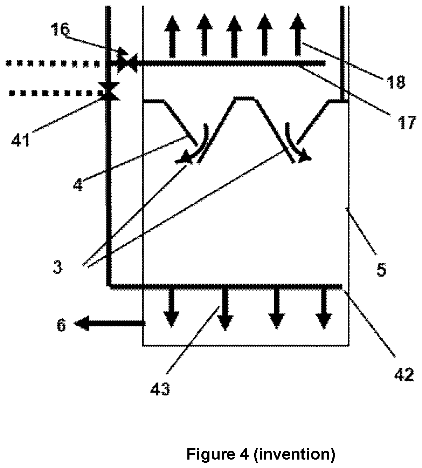

**Figure 4 (the present invention)** illustrates a schematic representation of a one-step device according to the Detailed description of the invention, comprising a UASB reactor chamber with a non-heated anaerobic digester chamber located at the bottom, both connected by a baffle sloping partition made of multiple pairs of baffles. The line of the figure having normal thickness illustrates the elements of the device; the thick line illustrates the flow of wastewater; and the dot line illustrates the control signal between elements.

(3) Baffle opening
(4) Baffle sloping partition
(4a) First baffle
(4b) Second baffle
(5) Anaerobic digester chamber
(6) Waste sludge
(16) Feeding reactor valve
(17) Reactor Distribution string
(18) Reactor Injection nozzles
(41) Digester mixing valve
(42) Digester Distribution string
(43) Digester Injection nozzles

## DETAILED DESCRIPTION OF THE INVENTION

Figure 3 illustrates the present invention of a one-stage combined UASB reactor-anaerobic digester device. In essence, the device comprises a tank divided in two sections or chambers: a lower, non-heated anaerobic digester chamber (5) (i.e., a digester without heating means, that works at an ambient temperature) located at the bottom of the upper, UASB type reactor chamber (10), which is similar to that shown in Fig. 1b (state-of-the art reactor). (Only) One baffle sloping partition (4) is comprised inside the tank, and is configured to separate said UASB reactor chamber from said anaerobic digester chamber located at the bottom thereof, while allowing the recirculation of solids and sludge from the anaerobic digester chamber (5) to the UASB reactor chamber (10) and back to the anaerobic digester chamber again (5). The baffle sloping partition comprises a pair of baffles (4a, 4b): a first baffle (4a) attached to one sidewall of the device tank, specifically below the sludge bed of the reactor chamber and at the upper part of the digester chamber, and confronted with a second baffle (4b) which is longer than the first baffle (4a) (preferably 0.2 to 0.5 m longer) and that is attached to the opposite sidewall of the device tank, both baffles (4a, 4b) being sloped downwards with respect to the perpendicular plane of the axial axis, the slope of the baffles having an angle ranging from 50° and 60° with respect to the perpendicular plane of the axial axis, and having a separation at the lower part of the baffles (preferably, between 0.1 to 0.3 m distance) which configures an opening, named baffle opening (3) to enable the solids and sludge to settle. The baffle slope partition (4) is located in such a position for the anaerobic digester chamber (5) to have an effective volume ranging from 40% to 60% of the total volume of the combined one-stage UASB-anaerobic digester device (i.e. of the tank).

There is a continuous solids and sludge (re)circulation from UASB reactor chamber (10) to anaerobic digester chamber (5) and from anaerobic digester chamber (5) back to UASB reactor chamber (10):

1) Sludge circulation from the UASB reactor chamber (10) to the anaerobic digester chamber (5): the solids and sludge generated inside the UASB reactor chamber fall down to the anaerobic digester chamber (5) by the baffle sloping partition (4). The baffle sloping partition comprises a first baffle (4a) and a longer second baffle (4b) (0.2 to 0.5 m longer), the slope of the pair of baffles has an angle ranging from 50° and 60° with respect to the perpendicular plane of the axial axis, to enable the solids and sludge to settle, and having a separation between the two baffles (0.1 to 0.3 m distance) at the lower part thereof which configures an opening or baffle opening (3).
2) Sludge recirculation from the anaerobic digester chamber (5) to the sludge bed (21) of the UASB reactor chamber (10): after the anaerobic digestion process, the sludge from the anaerobic digester chamber (5) is sent back to the UASB reactor chamber (10) through the sludge recycling means, which comprises a gas lift pump (35), a gas-sludge separator (39) and a sludge recycling pipe (40) which sends the sludge to the pulse feeding tank (12). The biogas exits the gas-sludge separator (39) through a pipe (29).

The gas-lift pump (35) operates with the biogas generated in the anaerobic digester chamber (5), which is collected by the baffle slope partition (4), being biogas collection the second function of said partition. The biogas is conducted by the baffle sloping partition (4) to the lower part of the sludge pipe (40) that elevates the sludge from the anaerobic digester chamber (5) to the gas-sludge separator (39). By buoyancy the biogas, which has a lower density than the sludge, rises quickly. By fluid pressure, the sludge is taken in the ascendant biogas flow and moves in the same direction as the biogas.

In one embodiment of the invention, the gas-lift is a conventional air-lift as the one used in the UASB reactor disclosed in WO2006132523A1.

However, it needs to be said that the aim of the air-lift disclosed in that document WO2006132523A1 is recycling inside the own reactor, but not between the digester chamber and the UASB reactor chamber, unlike the present invention.

One of the key technical points of the present invention is that the anaerobic digester chamber (5) is agitated and mixed (but not fed) by the same wastewater injection and mixing device as the one that mixes the UASB reactor chamber (10), but only as a mixing device (i.e. without injection) specifically by the same pulse feeding tank (12), switching from "*UASB feeding*" mode to "*anaerobic digester mixing*" mode; i.e., the injection and mixing device operates either towards the UASB reactor chamber (10) or alternatively towards the digester chamber (5) , depending on the conditions of the process, and this is a key difference with regard to the feeding systems of the prior art. To add more, a third alternative mode is possible: feeding the UASB reactor chamber (10) through the upper part directly, i.e. from the feeding tank (12) and to the three-phase separator (8).

Firstly, during the "UASB feeding" mode, similar to the mode disclosed in patent EP3009408 A1, the UASB reactor chamber (10) is fed and agitated by a pulse generated by filling the tank (12) of the wastewater injection and mixing device with a flow of wastewater and sludge through the recycled sludge pipe (40) with the sludge accumulated inside the UASB reactor chamber (10) and digested in the anaerobic digester (5), automatically opening the feeding reactor chamber valve (16) by means of the water level sensor (19) while the UASB reactor chamber by-pass valve (37) and the digester chamber mixing valve (41) are closed for measuring the minimum effective wastewater level $H_{min}$ and the maximum effective wastewater level $H_{max}$ inside the feeding tank (12). The water level sensor (19) sends a signal to the control means of the feeding reactor chamber valve (16) when the effective volume inside the feeding tank (12) reaches the maximum level $H_{max}$ to generate a pulse of flow of wastewater by gravity that passes through the inlet manifold (15) that connects the outlet of the feeding tank (14) with the distribution string (17), thus injecting said pulse of wastewater into the sludge bed reactor chamber (21); distributing the pulse of wastewater from the distribution string (17) to the bottom of the sludge bed (21) of the reactor chamber through the injection nozzles (18).

When the effective volume inside the feeding tank (12) reaches the minimum level $H_{min}$ to cut the pulse, the water level sensor (19) sends a signal to the control means (20) and automatically closes the feeding reactor chamber valve (16).

Secondly, the "digester mixing" mode is preferably activated from once every two hours to once an hour by feeding the tank (12) of the wastewater injection and mixing device with a flow of the wastewater and the sludge accumulated inside the UASB reactor chamber (10) and digested in the anaerobic digester (5), through the recycled sludge pipe (40); the anaerobic digester chamber mixing valve (41) is automatically opened by means of the water level sensor (19) while the UASB reactor chamber by-pass valve (37) and the UASB reactor chamber feeding valve (18) are closed, for measuring the minimum effective wastewater level $H_{min}$ and the maximum effective wastewater level $H_{max}$ inside the feeding tank (12). The water level sensor (19) sends a signal to the control means (20) of the anaerobic digester chamber mixing valve (41) when the effective volume inside the feeding tank (12) reaches the maximum level $H_{max}$ to generate a pulse of flow of wastewater by gravity that passes through the inlet manifold (15) that connects the outlet (14) of the feeding tank (12) with the digester distribution string (42), thus injecting said pulse of wastewater and sludge into the anaerobic digester chamber (5), distributing the pulse of wastewater and the sludge from the anaerobic distribution string (42) to the bottom of anaerobic digester chamber (5) through the injection nozzles (43), by gravity; when the effective volume inside the feeding tank (12) reaches the minimum level $H_{min}$ to cut the pulse, the water level sensor (19) sends a signal to the control means (20) and automatically closes the digester chamber mixing valve (41).

Thirdly, the "UASB by-pass" mode operates the system as an Imhoff tank, (i.e., a sedimentation chamber for the sewage and an anaerobic digester for the solids, without passing the influent through the sludge bed) (21). The device is operated by feeding the tank (12) of the wastewater injection and mixing device with a flow of wastewater and with the sludge accumulated inside the UASB reactor chamber (10) and digested in the anaerobic digester (5) through the recycled sludge pipe (40). A flow meter sensor (38) measures the influent flow, and sends a signal to the control means (20) when an influent peak flow is detected for opening the UASB reactor chamber by-pass valve (37) while closing the feeding reactor chamber valve (16) and the digester chamber mixing valve (41). The flow of wastewater and sludge is distributed from the feeding tank (12) to the three-phase separator (8) by the UASB reactor chamber by-pass pipe (37), operating such separator as a sedimentation chamber, which separates from one part the solids and the sludge, which fall through the sludge bed (21) and baffle sloping partition (4) down to the anaerobic digester chamber (5), and on the other part the clarified effluent (7) with the water overflow weir (9). The "UASB by-pass" mode operates in a continuous feeding mode by gravity, without pulses.

Preferably, the water level sensor (19) is controlled by control means (20) (Programmable Logic Controller) that switches from one pulse to another, i.e. from "*UASB feeding*" mode to "UASB by-pass" mode, or "*anaerobic digester mixing*".

**EXAMPLES**

**Example 1. Experimental test of one-stage pulsating UASB- solids anaerobic digester device for treating unsettled wastewater during summer conditions**

Raw wastewater was fed to a UASB reactor as described in the present invention (*Detailed description of the invention*), being inoculated with *flocculent* sludge in Loulé (Portugal), at ambient temperature.

Main design parameters of the system, said system including both UASB and solids anaerobic digester, are:

REACTOR PARAMETERS

| | | |
|---|---|---|
| - UASB volume | 4.5 | m$^3$ |
| - Anaerobic digester volume | 4.5 | m$^3$ |
| - % Digester volume/total reactor | 50 | % |

INJECTION AND MIXING WASTEWATER DEVICE

Feed tank

| | | |
|---|---|---|
| - Tank diameter | 600 | mm |
| - Feed tank volume | 0.190 | m$^3$ |
| - Number of inlet manifolds | 1 | |
| - Number of distribution strings | 1 | |
| - Inlet nozzle diameter | 45 | mm |
| - Number of nozzles | 4 | |
| - Baffles slopes | 60° | |

PROCESS PARAMETERS

| | | |
|---|---|---|
| - Influent wastewater flow | 0,375 | m$^3$/h |
| - Hydraulic retention time in UASB | 12 | h |
| - Number of pulses per day | 71 | pulses |
| - SRT | 150 | days |

WASTEWATER PARAMETERS

| - Water Temperature (summer) | 25-29 | °C |
| - Ambient temperature (summer) | 22-39 | °C |
| - $COD_S$ | $307 \pm 63$ | mg/l |
| - $COD_T$ | $1167 \pm 63$ | mg/l |
| - TSS | $425 \pm 87$ | mg/l |
| - Sulphate | $46 \pm 42$ | mg/l |

Next, the main experimental results were obtained:

RESULTS

| $COD_T$ (%) | 81 |
| RE Sulphate (%) | 86.3 |
| $m^3$ $CH_4$/kg $COD_{removed}$ | 0.24 |
| Biogas production ($m^3$/day) | 2.4 |

**Example 2. Experimental test of one-stage pulsating UASB-solids anaerobic digester for treating unsettled wastewater during winter conditions**

The parameters defined in Example 1 applied also to this experimental case, but it was operated during winter conditions.

WASTEWATER PARAMETERS

| - Water Temperature (winter) | 15-18 | °C |
| - Ambient temperature (winter) | 6-18 | °C |

RESULTS

| $COD_T$ (%) | 80 |
| RE Sulphate (%) | 82 |
| $m^3$ $CH_4$/kg $COD_{removed}$ | 0.14 |
| Biogas production ($m^3$/day) | 1.5 |

The results obtained represent a robust performance during the whole year, and an important, significant increase (21.7%, 22%, 22%) in $COD_T$ removal from reported values of prior art: Imhoff tank, pulsating UASB and two-stage UASB-digester, respectively.

**Claims**

1. A one-stage device for treating unsettled sewage through a combined UASB reactor-anaerobic digester action in one stage, comprising:

- a tank divided in two chambers, wherein

    ∘ a first chamber is a UASB reactor chamber (10) located in the upper section of the tank, having a sludge bed (21) at the lower part of the chamber (10), a three-phase separator (8) at the upper part of the chamber, and an external non-pressurized wastewater injection and mixing device having a feeding tank (12), configured to feed and mix the UASB reactor chamber (10) by pulses, making the influent pass through the sludge bed (21) of the UASB reactor chamber (10); and

∘ a second chamber is an anaerobic digester (5) chamber located in the lower section of the tank, below the UASB reactor chamber (10), without heating means for the sewage and configured to receive and hydrolyze the entrapped solids which accumulate in the sludge bed (21) of the upper UASB reactor chamber (10);

wherein both chambers are connected through
- at least one baffle sloping partition (4), configured to separate the upper UASB reactor chamber (10) from the lower anaerobic digester chamber (5), and to collect biogas generated in the anaerobic digester (5) and the sludge generated in the UASB reactor; and
- means for recycling sludge from the anaerobic digester chamber (5) to the UASB reactor chamber (10), comprising: a gas-lift pump (35), a gas-sludge separator (39), and a sludge recycling pipe (40); wherein said gas-lift pump (35) elevates the sludge from the anaerobic digester chamber (5) to the gas-sludge separator (39), with the energy provided by the biogas produced in the anaerobic digester chamber (5), and wherein the sludge recycling pipe (4) sends the sludge from the gas-sludge separator (39) to the pulse feeding tank (12) by gravity;

and **characterized in that** the pulse wastewater injection and mixing device of the UASB reactor chamber (10) is also configured to mix the anaerobic digester chamber (5), comprising

two valves (16, 41) that alternatively let the flow of wastewater and sludge pass from the feeding tank (12) to the UASB reactor chamber (10) or from the feeding tank (12) to the anaerobic digester chamber (5); also comprising
a UASB by-pass pipe and a valve (37) configured to inject the flow of wastewater and sludge from the feeding tank (12) of the external pulse wastewater injection and mixing device directly to the three-phase separator (8); and
control means (20) that act closing or opening the valves (16, 41).

2. The device for treating unsettled sewage according to claim 1, wherein the external non-pressurized wastewater injection and mixing device comprises:

- an external wastewater feeding tank (12), located outside the UASB reactor chamber (10) and above the reactor water level, having an effective wastewater volume for generating pulses by gravity ranging from 0.5% to 1.5% of the total reactor chamber (10) volume, said effective volume inside the tank being at a height between a minimum wastewater level $H_{min}$ equal or higher than 0.5 m and a maximum wastewater level $H_{max}$ equal or lower than 2.5 m above the water level of the reactor (10), $H_{max}$ being always higher than $H_{min}$ for producing the hydraulic energy of the pulse; and the feeding tank (12) having an upper inlet (13) as well as an outlet (14) at the bottom for the wastewater; and being connected to the reactor chamber (10) through
- an inlet manifold (15), that at one end connects downwards the outlet (14) of the feeding tank (12) with
- one or more wastewater distribution strings (17) at a second end, each distribution string (17) having a valve (16) automatically controlled by the effective wastewater level inside the feeding tank (12), the string or strings being buried in the sludge bed (21) inside the reactor chamber (10) for distributing the wastewater pulses to the lower part of the reactor chamber (10) through
- injection nozzles (18) having a discharge point located at a height of between 200 and 300 mm from the lower part of the reactor chamber to avoid dead zones and energy losses;
- a water level sensor (19) for measuring the minimum effective wastewater level $H_{min}$ and the maximum effective wastewater level $H_{max}$ inside the feeding tank (12), capable of sending a signal to control means (20) that act closing or opening the valve (16);
- an inlet manifold (15), connected to the outlet of the feeding tank (12) at one end and to a digester distribution string (42) at the other end; said digester distribution string (42) connecting
- an automatic valve (41) outside the UASB reactor chamber (10) with the inside thereof, and being buried in
- a sludge bed of the anaerobic digester chamber (5) located above the bottom of the digester chamber (5); and also having
- injection nozzles (43) similar to those of the reactor chamber (10), which form part of the distribution string (42) and that are located at a height of between 200 and 300 mm from the bottom of the reactor digester chamber (5).

3. The device according to any one of claims 1 or 2, wherein the reactor (10) comprises a granular or flocculent fluidized sludge bed (21).

4. The device of any one of previous claims 1 to 3, wherein the anaerobic digester chamber (5) has an effective volume ranging from 40% to 60% of the total volume of the tank.

5. The device of any one of previous claims 1 to 4, wherein it comprises one baffle sloping partition (4) made of a pair of baffles, which separate the chambers: a first baffle (4a) attached to a sidewall of the main chamber (10) and confronted with a second baffle (4b), which is longer than the first baffle (4a), and that is attached to the opposite sidewall of the chamber (10), both baffles being sloped downwards with respect to the perpendicular plane of the axial axis, and having a separation at the lower part of the baffles which configures an opening (3) to enable the solids and sludge to settle.

6. The device of any one of previous claims 1 to 5, wherein it comprises two or more baffle sloping partitions (4), each one made of a pair of baffles: a first baffle (4a) attached to a sidewall of the main chamber (10) and confronted with a second baffle (4b), which is longer than the first baffle (4a), and that is attached to the opposite sidewall of the chamber (10), both baffles being sloped downwards with respect to the perpendicular plane of the axial axis, and having a separation at the lower part of the baffles which configures an opening (3) to enable the solids and sludge to settle.

7. The device of any one of previous claims 1 to 6, wherein the means for bypassing comprises a flow meter sensor (38) located at an inlet pipe (1) for measuring the influent flow; a UASB bypass pipe and a valve (37), wherein the flow meter (38) is configured to detect peak flows of influent wastewater and send a signal to control means (20) configured to close the feeding valve (16) of the UASB reactor chamber (10) and open the UASB bypass valve (37) which communicates directly the pulse feeding tank (12) to the three-phase separator (8) of the AUSB reactor chamber (10) located at the upper part thereof.

8. A method for the treatment of unsettled sewage by using the UASB reactor-digester combined device according to any one of claims 1 to 7, wherein said method comprises

a) feeding the UASB reactor chamber (10) and generating a pulse by:

a.1) feeding the tank (12) of the wastewater injection and mixing device with a flow of wastewater and with sludge generated inside the UASB reactor chamber (10) and digested in the anaerobic digester chamber (5), fed into the UASB reactor chamber (10) through the recycled sludge pipe (40);
a.2) automatically opening (only) the feeding reactor chamber valve (16), while the UASB by-pass valve (37) and the digester mixing valve (41) are closed, by means of the water level sensor (19) for measuring the minimum effective wastewater level $H_{min}$ and the maximum effective wastewater level $H_{max}$ inside the feeding tank (12), that sends a signal to the control means (20) of the feeding reactor chamber valve when the effective volume inside the feeding tank reaches the maximum level $H_{max}$ to generate a pulse of flow of wastewater by gravity that passes through the inlet manifold (15) that connects the outlet (14) of the feeding tank (12) with the distribution string (17), thus injecting said pulse of wastewater into the sludge bed reactor chamber (10);
a.3) distributing the pulse of wastewater from the distribution string (17) to the bottom of the sludge bed (21) of the reactor chamber (10) through the injection nozzles (18), and
a.4) automatically closing the feeding reactor chamber valve (16) by means of the water level sensor (18) that sends a signal to the control means (20) when the effective volume inside the feeding tank (12) reaches the minimum level $H_{min}$ to cut the pulse;

and **characterized in that** the method also comprises:
b) feeding the anaerobic digester chamber (5) by pulse, by:

b.1) feeding the tank (12) of the wastewater injection and mixing device with a flow of wastewater, and with the sludge generated inside the UASB reactor chamber (10) and digested in the anaerobic digester chamber (5), fed into the UASB reactor chamber (10) through the recycled sludge pipe (40);
b.2) automatically opening the anaerobic mixing valve (41), while the UASB reactor by-pass valve (37) and UASB reactor feeding valve (16) are closed, by means of the water level sensor (18) for measuring the minimum effective wastewater level $H_{min}$ and the maximum effective wastewater level $H_{max}$ inside the feeding tank (12), that sends a signal to the control means (20) of the anaerobic mixing valve (41) when the effective volume inside the tank (12) reaches the maximum level $H_{max}$ to generate a pulse of flow of wastewater by gravity that passes through the inlet manifold (15) that connects the outlet (14) of the feeding tank (12) with the digester distribution string (42), thus injecting said pulse of wastewater and sludge into the anaerobic digester chamber (5);

b.3) distributing the pulse of wastewater and sludge from the anaerobic distribution string (42) to the bottom of anaerobic digester chamber (5) through the injection nozzles (43), by gravity; and

b.4) automatically closing the digester mixing valve (41) by means of the water level sensor (18) that sends a signal to the control means (20) when the effective volume inside the feeding tank (12) reaches the minimum level $H_{min}$ to cut the pulse.

9. The method according to claim 8, wherein the unsettled sewage is under sub-mesophilic temperatures equal or below 15ºC and/or has a temperature showing a fluctuation in time ranging from $\pm 7.5$ºC in relation to a mean temperature.

10. The method according to any one of claims 8 or 9, wherein the step b), which results from closing the feeding reactor chamber valve (16) and opening the anaerobic digester chamber mixing valve (41), is activated from once every two hours to once and hour.

11. The method according to any one of claims 8 to 10, wherein the water level sensor (18) is controlled by control means (20) that switches from one pulse to another.

12. The method according to any one of claims 8 to 11, wherein the method also comprises:

c.1) feeding the tank (12) of the wastewater injection and mixing device with a flow of wastewater and with the sludge generated inside the UASB reactor chamber (10) and digested in the anaerobic digester chamber (5), fed into the UASB reactor chamber (10) through the recycled sludge pipe (40);

c.2) Measuring the influent flow by a flow meter sensor (38), configured to send a signal to control means (20) when an influent peak flow is detected for opening the UASB by-pass valve (37) while closing the feeding reactor chamber valve (16) and the digester chamber mixing valve (41);

c.3) distributing the flow of wastewater and sludge from the feeding tank (12) to the three-phase separator (8) at the upper part of the UASB reactor chamber (10) by the UASB by-pass pipe (37).

**Patentansprüche**

1. Einstufige Vorrichtung zur Behandlung von ungeklärtem Abwasser durch eine Kombination aus UASB-Reaktor/Vergärungsanlage in einer einzelnen Stufe, mit:

- einem Behälter, der in zwei Kammern unterteilt ist, wobei

○ eine erste Kammer eine UASB-Reaktorkammer (10) ist, die in dem oberen Abschnitt des Behälters angeordnet ist, mit einem Klärschlammbett (21) an einem unteren Teil der Kammer (10), einem Dreiphasenseparator (8) an dem oberen Teil der Kammer, und mit einer externen drucklosen Abwassereinspritz- und Mischvorrichtung mit einem Speisebehälter (12), die ausgebildet ist, die UASB-Reaktorkammer (10) durch Pulse zu speisen und eine Mischung auszuführen, wodurch die einströmenden Stoffe durch das Klärschlammbett (21) der UASB-Reaktorkammer (10) strömen; und

○ eine zweite Kammer eine Vergärungsanlagen- (5) Kammer ist, die in dem unteren Abschnitt des Behälters unter der UASB-Reaktorkammer (10) ohne Erwärmungsvorrichtung für das Abwasser angeordnet ist und ausgebildet, die eingefangenen Feststoffe, die sich in dem Klärschlammbett (21) der oberen UASB-Reaktorkammer (10) ansammeln, aufzunehmen und zu hydrolysieren;

wobei beide Kammern verbunden sind durch

- mindestens eine schräge Aufpralltrennwand (4), die ausgebildet ist, die obere UASB-Reaktorkammer (10) von der unteren Vergärungsanlagenkammer (5) abzutrennen und Biogas, das in der Vergärungsanlage (5) generiert wird, und den Klärschlamm, der in dem UASB-Reaktor erzeugt wird, zu sammeln; und

- eine Einrichtung zum Recyceln von Klärschlamm aus der Vergärungsanlagenkammer (5) in die UASB-Reaktorkammer (10), mit: einer Gashebepumpe (35), einem Gas-Klärschlamm-Separator (39) und einer Klärschlammrecyclingleitung (40), wobei die Gashebepumpe (35) den Klärschlamm aus der Vergärungsanlagenkammer (5) zu dem Gas-Klärschlamm-Separator (39) anhebt mittels der Energie, die durch das in der Vergärungsanlagenkammer (5) erzeugte Biogas bereitgestellt wird, und wobei die Klärschlammrecyclingleitung (4) den Klärschlamm von dem Gas-Klärschlamm-Separator (39) mittels Schwerkraft in den Pulsspeisebehälter (12) überführt;

und **dadurch gekennzeichnet, dass** die Pulsabwassereinspritzungs- und Mischvorrichtung der UASB-Reaktorkammer (10) ferner ausgebildet ist, einen Mischvorgang in der Vergärungsanlagenkammer (5) auszuführen, mit

zwei Ventilen (16, 41), die abwechselnd einen Strom aus Abwasser und Klärschlamm aus dem Speisebehälter (12) in die UASB-Reaktorkammer (10) oder von dem Speisebehälter (12) in die Vergärungsanlagenkammer (5) zulassen; ferner mit

einer UASB-Umgehungsleitung und einem Ventil (37), die ausgebildet sind, den Strom aus Abwasser und Klärschlamm aus dem Speisebehälter (12) der externen Pulsabwassereinspritz- und Mischvorrichtung direkt in den Dreiphasenseparator (8) einzuführen; und

einer Steuereinrichtung (20), die ausgebildet ist, die Ventile (16, 41) zu schließen oder zu öffnen.

2. Vorrichtung zur Behandlung von ungeklärtem Abwasser nach Anspruch 1, wobei die externe drucklose Abwassereinspritz- und Mischvorrichtung aufweist:

- einen externen Abwasserspeisebehälter (12), der außerhalb der UASB-Reaktorkammer (10) und über dem Reaktorwasserpegel angeordnet ist, mit einem effektiven Abwasservolumen zur Erzeugung von Pulsen durch Schwerkraft im Bereich von 0,5 % bis 1,5 % des gesamten Reaktorkammer (10) -Volumens, wobei das effektive Volumen in dem Behälter bei einer Höhe zwischen einem minimalen Abwasserpegel $H_{max}$ von gleich oder höher als 0,5 m und einem maximalen Abwasserpegel $H_{max}$ gleich oder unter 2,5 m über dem Wasserpegel des Reaktors (10) liegt, wobei $H_{max}$ stets höher als $H_{min}$ zur Erzeugung der hydraulischen Energie der Pulse ist; und der Speisebehälter (12) einen oberen Einlass (13) und einen Auslass (14) an der Unterseite für das Abwasser hat; und mit der Reaktorkammer (10) verbunden ist durch
- eine Einlasssammelleitung (15), die an einem Ende nach unten zu dem Auslass (14) des Speisebehälters (12) eine Verbindung herstellt mit
- einem oder mehreren Abwasserverteilungssträngen (17) an einem zweiten Ende, wobei jeder Verteilungsstrang (17) ein Ventil (16) aufweist, das automatisch durch den effektiven Abwasserpegel im Inneren des Speisebehälters (12) gesteuert ist, wobei der Strang oder die Stränge vergraben sind in dem Klärschlammbett (21) im Inneren der Reaktorkammer (10) zur Verteilung der Abwasserpulse zu dem unteren Teil der Reaktorkammer (10) durch
- Einspritzdüsen (18) mit einem Entladepunkt, der an einer Höhe zwischen 200 und 300 mm ausgehend von dem unteren Teil der Reaktorkammer angeordnet ist, um Totzonen und Energieverluste zu vermeiden;
- einen Wasserpegelsensor (19) zur Messung des minimalen effektiven Abwasserpegels $H_{min}$ und des maximalen effektiven Abwasserpegels $H_{max}$ im Inneren des Speisebehälters (12), der ausgebildet ist, ein Signal an eine Steuereinrichtung (20) zu senden, die ausgebildet ist, das Ventil (16) zu schließen oder zu öffnen;
- eine Einlasssammelleitung (15), die mit dem Auslass des Speisebehälters (12) an einem Ende und mit einem Vergärungsverteilungsstrang (42) an dem anderen Ende verbunden ist; wobei der Vergärungsverteilungsstrang (42) eine Verbindung herstellt
- zwischen einem automatischen Ventil (41) außerhalb der UASB-Reaktorkammer (10) und deren Inneren, und wobei der Strang vergraben ist in
- einem Klärschlammbett der Vergärungsanlagenkammer (5), das über der Unterseite der Vergärungskammer (5) angeordnet ist; und auch aufweist
- Einspritzdüsen (43) ähnlich zu jenen der Reaktorkammer (10), die einen Teil des Verteilungsstrangs (42) bilden und die bei einer Höhe zwischen 200 und 300 mm ausgehend von der Unterseite der Reaktorvergärungsanlagenkammer (5) angeordnet sind.

3. Vorrichtung nach Anspruch 1 oder 2, wobei der Reaktor (10) ein granulares oder flockiges fluidisiertes Klärschlammbett (21) aufweist.

4. Vorrichtung nach einem der vorhergehenden Ansprüche 1 bis 3, wobei die Vergärungsanlagenkammer (5) ein effektives Volumen im Bereich von 40 % bis 60 % des Gesamtvolumens des Behälters hat.

**5.** Vorrichtung nach einem der vorhergehenden Ansprüche 1 bis 4, wobei sie eine einzige geneigte Aufpralltrennwand (4) aufweist, die aus zwei Ablenkblechen aufgebaut ist, die die Kammern unterteilen: ein erstes Ablenkblech (4a), das an einer Seitenwand der Hauptkammer (10) gegenüberliegend zu einem zweiten Ablenkblech (4b) angebracht ist, das länger ist als das erste Ablenkblech (4a) und das an der gegenüberliegenden Seitenwand der Kammer (10) angebracht ist, wobei beide Ablenkbleche in Bezug auf die senkrechte Ebene der axial verlaufenden Achse nach unten geneigt sind und einen Abstand an dem unteren Teil der Ablenkbleche haben, wodurch eine Öffnung (3) gebildet ist, die ein Absetzen von Feststoffen und Klärschlamm ermöglicht.

**6.** Vorrichtung nach einem der vorhergehenden Ansprüche 1 bis 5, wobei sie zwei oder mehr geneigte Aufpralltrennwände (4) aufweist, wobei jede aus einem Paar aus Ablenkblechen aufgebaut ist; einem ersten Ablenkblech (4a), das an einer Seitenwand der Hauptkammer (10) und gegenüberliegend zu einem zweiten Ablenkblech (4b) angebracht ist, das länger ist als das erste Ablenkblech (4a), und das an der gegenüberliegenden Seitenwand der Kammer (10) angebracht ist, wobei beide Ablenkbleche in Bezug auf die senkrechte Ebene der axial verlaufenden Achse nach unten geneigt sind und einen Abstand an dem unteren Teil der Ablenkbleche haben, der eine Öffnung (3) bildet, um das Absetzen von Feststoffen und Klärschlamm zu ermöglichen.

**7.** Vorrichtung nach einem der vorhergehenden Ansprüche 1 bis 6, wobei die Einrichtung zur Umgehung aufweist: einen Durchflusssensor (38), der an einer Einlassleitung (1) zum Messen der einströmenden Substanzen angeordnet ist; eine UASB-Umgehungsleitung und ein Ventil (37), wobei der Durchflussmesser (38) ausgebildet ist, Spitzendurchflusswerte von einströmendem Abwasser zu detektieren und ein Signal an eine Steuereinrichtung (20) zu senden, die ausgebildet ist, das speisende Ventil (16) der UASB-Reaktorkammer (10) zu schließen und das UASB-Umgehungsventil (37), das direkt mit dem Pulsspeisebehälter (12) in Verbindung steht, zu dem Dreiphasenseparator (8) der UASB-Reaktorkammer (10), die an dem oberen Teil angeordnet ist, zu öffnen.

**8.** Verfahren zur Behandlung von ungeklärtem Abwasser durch Verwendung der Vorrichtung in Form einer Kombination aus UASB-Reaktor/ Vergärungsanlage nach einem der Ansprüche 1 bis 7, wobei das Verfahren umfasst

a) Speisen der UASB-Reaktorkammer (10) und Erzeugen eines Pulses durch:

a.1) Speisen des Behälters (12) der Abwassereinspritz- und Mischvorrichtung mit einem Zustrom von Abwasser und mit Klärschlamm, der im Inneren der UASB-Reaktorkammer (10) erzeugt wird und in der Vergärungsanlagenkammer (5) vergoren wird, wobei die Substanzen durch die Klärschlammrecyclingleitung (40) in die UASB-Reaktorkammer (10) eingeführt werden;
a.2) automatisches Öffnen (nur) des speisenden Reaktorkammerventils (16), während das UASB-Umgehungsventil (37) und das Vergärungsanlagenmischventil (41) geschlossen werden, mittels des Wasserpegelsensors (19) zur Messung des minimalen effektiven Abwasserpegels $H_{min}$ und des maximalen effektiven Abwasserpegels $H_{max}$ im Inneren des Speisebehälters (12), der ein Signal an die Steuereinrichtung (20) des speisenden Reaktorkammerventils sendet, wenn das effektive Volumen im Inneren des Speisebehälters den maximalen Pegel $H_{max}$ erreicht, um einen Strömungspuls des Abwassers durch Schwerkraft zu erzeugen, der durch die Einlasssammelleitung (15) strömt, die den Auslass (14) des Speisebehälters (12) mit dem Verteilungsstrang (17) verbindet, wodurch der Abwasserpuls in die Klärschlammbettreaktorkammer (10) eingeführt wird;
a.3) Verteilen des Abwasserpulses aus dem Verteilungsstrang (17) zu der Unterseite des Klärschlammbetts (21) der Reaktorkammer (10) mittels der Einspritzdüsen (18), und
a.4) automatisches Schließen des speisenden Reaktorkammerventils (16) durch den Wasserpegelsensor (18), der ein Signal an die Steuereinrichtung (20) sendet, wenn das effektive Volumen im Inneren des Speisebehälters (12) den minimalen Pegel $H_{min}$ erreicht, um den Puls abzuschneiden;

und **dadurch gekennzeichnet, dass** das Verfahren ferner umfasst:
b) Speisen der Vergärungsanlagenkammer (5) durch einen Puls, durch:

b.1) Speisen des Behälters (12) der Abwassereinspritz- und Mischvorrichtung mit einem Abwasserstrom und mit dem Klärschlamm, der im Inneren der UASB-Reaktorkammer (10) erzeugt und in der Vergärungsanlagenkammer (5) vergärt wird, wobei der Strom durch die Klärschlammrecyclingleitung (40) in die UASB-Reaktorkammer (10) geführt wird;
b.2) automatisches Öffnen des Vergärungsmischventils (41), während das UASB-Reaktorumgehungsventil (37) und das UASB-Reaktorspeiseventil (16) geschlossen werden, durch den Wasserpegelsensor (18) zum Messen des minimalen effektiven Abwasserpegels $H_{min}$ und des maximalen effektiven Abwasserpegels $H_{max}$

im Inneren des Speisebehälters (12), der ein Signal an die Steuereinrichtung (20) des Vergärungsmischventils (41) sendet, wenn das effektive Volumen im Inneren des Behälters (12) den maximalen Pegel $H_{max}$ erreicht, um einen Strömungspuls aus Abwasser durch Schwerkraft zu erzeugen, der die Einlasssammelleitung (15) durchläuft, die den Auslass (14) des Speisebehälters (12) mit dem Vergärungsanlagenverteilungsstrang (42) verbindet, wodurch der Abwasserpuls und der Klärschlamm in die Vergärungsanlagenkammer (5) eingeführt werden;

b.3) Verteilen des Abwasserpulses und des Klärschlamms aus dem Vergärungsverteilungsstrang (42) zur Unterseite der Vergärungsanlagenkammer (5) durch die Einspritzdüsen (43) mittels Schwerkraft; und

b.4) automatisches Schließen des Vergärungsmischventils (41) mittels des Wasserpegelsensors (18), der ein Signal an die Steuereinrichtung (20) sendet, wenn das effektive Volumen im Inneren des Speisebehälters (12) den minimalen Pegel $H_{min}$ erreicht, um den Puls abzuschneiden.

9. Verfahren nach Anspruch 8, wobei das ungeklärte Wasser unterhalb von submesophilen Temperaturen gleich oder unter 15 °C ist und/oder eine Temperatur hat, die zeitlich im Bereich von ± 7,5 °C in Bezug auf eine mittlere Temperatur schwankt.

10. Verfahren nach Anspruch 8 oder 9, wobei der Schritt b), der sich aus dem Schließen des speisenden Reaktorkammerventils (16) und dem Öffnen des Vergärungsmischventils (41) ergibt, von einmal alle zwei Stunden bis einmal stündlich aktiviert wird.

11. Verfahren nach einem der Ansprüche 8 bis 10, wobei der Wasserpegelsensor (18) durch eine Steuereinrichtung (20) gesteuert wird, die von einem Puls zu einem weiteren Puls schaltet.

12. Verfahren nach einem der Ansprüche 8 bis 11, wobei das Verfahren ferner umfasst:

c.1) Speisen des Behälters (12) der Abwassereinspritz- und Mischvorrichtung mit einem Abwasserstrom und mit dem Klärschlamm, der im Inneren der UASB-Reaktorkammer (10) erzeugt und in der Vergärungsanlagenkammer (5) vergärt wird, die in die UASB-Reaktorkammer (10) durch die Klärschlammrecyclingleitung (40) eingeführt werden;

c.2) Messen des einfließenden Stroms durch einen Durchflusssensor (38), der ausgebildet ist, ein Signal an eine Steuereinrichtung (20) zu senden, wenn ein Spitzenwert der einfließenden Strömung erkannt wird, um das UASB-Umgehungsventil (37) zu öffnen, während das speisende Reaktorkammerventil (16) und das Vergärungskammermischventil (41) geschlossen werden;

c.3) Verteilen des Abwasserstroms und des Klärschlamms aus dem Speisebehälter (12) in den Dreiphasenseparator (8) an dem oberen Teil der UASB-Reaktorkammer (10) mittels der UASB-Umgehungsleitung (37).

## Revendications

1. Un dispositif à une étape pour traiter des eaux usées non décantées par une action combinée d'un réacteur UASB et d'un digesteur anaérobie en une étape, comprenant :

- une cuve divisée en deux chambres, dans lequel

   ∘ une première chambre est une chambre (10) de réacteur UASB située dans la partie supérieure de la cuve, comportant un lit de boues (21) à la partie inférieure de la chambre (10), un séparateur à trois phases (8) à la partie supérieure de la chambre, et un dispositif externe d'injection et de mélange d'eaux usées non pressurisées comportant un réservoir d'alimentation (12), configuré pour alimenter et mélanger la chambre (10) du réacteur UASB par impulsions, faisant passer le flux entrant à travers le lit de boues (21) de la chambre (10) du réacteur UASB ; et
   ∘ une deuxième chambre est une chambre (5) de digesteur anaérobie située dans la partie inférieure de la cuve, au-dessous de la chambre (10) du réacteur UASB, sans moyen de chauffage pour les eaux usées et configurée pour recevoir et hydrolyser les solides piégés qui s'accumulent dans le lit de boues (21) de la chambre supérieure (10) du réacteur UASB ;

les deux chambres étant reliées par
- au moins une cloison inclinée (4) formant déflecteur, configurée pour séparer la chambre supérieure (10) du réacteur UASB de la chambre inférieure (5) du digesteur anaérobie, et pour collecter le biogaz généré dans le digesteur anaérobie (5) et les boues générées dans le réacteur UASB ; et
- des moyens de recyclage des boues de la chambre (5) du digesteur anaérobie vers la chambre (10) du réacteur UASB, comprenant :
une pompe "gas-lift", ou d'élévation de gaz, (35), un séparateur gaz-boues (39), et un tuyau (40) de recyclage des boues ; ladite pompe (35) d'élévation de gaz élève les boues de la chambre inférieure (5) du digesteur anaérobie jusqu'au séparateur gaz-boues (39), avec l'énergie fournie par le biogaz produit dans la chambre inférieure (5) du digesteur anaérobie, et le tuyau (4) de recyclage de boues envoie par impulsions les boues depuis le séparateur gaz-boues (39) jusque dans le réservoir (12) d'alimentation, par gravité ;

et **caractérisé en ce que** le dispositif d'injection par impulsions et de mélange d'eaux usées de la chambre (10) du réacteur UASB est également configuré pour mélanger la chambre (5) du digesteur anaérobie, comprenant

deux vannes (16, 41) qui laissent alternativement passer le flux d'eaux usées et de boues depuis le réservoir d'alimentation (12) vers la chambre (10) du réacteur UASB ou depuis le réservoir d'alimentation (12) vers la chambre (5) du digesteur anaérobie ; et comprenant également
un tuyau de dérivation UASB et une vanne (37) configurés pour injecter le flux d'eaux usées et de boues provenant du réservoir d'alimentation (12) du dispositif externe d'injection par impulsions et de mélange d'eaux usées directement vers le séparateur à trois phases (8) ; et
des moyens de commande (20) qui agissent de façon à fermer ou ouvrir les vannes (16, 41).

2. Le dispositif de traitement d'eaux usées non décantées selon la revendication 1, dans lequel le dispositif externe d'injection et de mélange des eaux usées non pressurisées comprend :

- un réservoir (12) externe d'alimentation en eaux usées, situé à l'extérieur de la chambre (10) du réacteur UASB et au-dessus du niveau d'eau du réacteur, ayant un volume d'eaux usées efficace pour générer des impulsions par gravité allant de 0,5 % à 1,5 % du volume total de la chambre (10) du réacteur, ledit volume effectif à l'intérieur du réservoir étant à une hauteur comprise entre un niveau minimum d'eaux usées $H_{min}$ égal ou supérieur à 0,5 m et un niveau maximum d'eaux usées $H_{max}$ égal ou inférieur à 2,5 m au-dessus du niveau d'eau du réacteur (10), $H_{max}$ étant toujours supérieur à $H_{min}$ pour produire l'énergie hydraulique de l'impulsion ; et le réservoir d'alimentation (12) ayant une entrée supérieure (13) ainsi qu'une sortie (14) au niveau du fond, pour les eaux usées ; et étant relié à la chambre (10) du réacteur par
- un collecteur d'entrée (15), qui, à une extrémité, relie vers le bas la sortie (14) du réservoir d'alimentation (12) avec
- une ou plusieurs chaînes (17) de distribution d'eaux usées à une deuxième extrémité, chaque chaîne de distribution (17) comportant une vanne (16) automatiquement commandée par le niveau effectif des eaux usées à l'intérieur du réservoir d'alimentation (12), la ou les chaînes étant enfouies dans le lit de boues (21) à l'intérieur de la chambre (10) du réacteur pour distribuer les impulsions d'eaux usées vers la partie inférieure de la chambre (10) du réacteur au moyen
- de buses d'injection (18) ayant un point de refoulement situé à une hauteur comprise entre 200 et 300 mm de la partie basse de la chambre du réacteur pour éviter les zones mortes et les pertes d'énergie ;
- un capteur de niveau d'eau (19) pour mesurer le niveau effectif minimum $H_{min}$ des eaux usées et le niveau effectif maximum $H_{max}$ des eaux usées à l'intérieur du réservoir d'alimentation (12), apte à envoyer un signal à des moyens de commande (20) qui agissent de façon à fermer ou à ouvrir la vanne (16) ;
- un collecteur d'entrée (15), relié à la sortie du réservoir d'alimentation (12) à une extrémité et à une chaîne de distribution (42) du digesteur à l'autre extrémité ; ladite chaîne de distribution (42) du digesteur reliant
- une vanne automatique (41) extérieure à la chambre (10) du réacteur UASB avec l'intérieur de celle-ci, et étant enfouie dans
- un lit de boues de la chambre (5) du digesteur situé au-dessus du fond de la chambre (5) du digesteur ; et ayant également
- des buses d'injection (43) similaires à celles de la chambre (10) du réacteur, qui font partie de la chaîne de distribution (42) et qui sont situées à une hauteur comprise entre 200 et 300 mm à partir du fond de la chambre (5) du réacteur digesteur.

3. Le dispositif selon l'une quelconque des revendications 1 ou 2, dans lequel le réacteur (10) comprend un lit (21) de boues fluidisées granulaires ou floculantes.

4. Le dispositif selon l'une quelconque des revendications précédentes 1 à 3, dans lequel la chambre (5) du digesteur anaérobie a un volume efficace allant de 40 % à 60 % du volume total de la cuve.

**5.** Le dispositif selon l'une quelconque des revendications précédentes 1 à 4, **caractérisé en ce qu'**il comprend une cloison inclinée (4) formant déflecteur constituée par une paire de déflecteurs qui séparent les chambres : un premier déflecteur (4a) fixé à une paroi latérale de la chambre principale (10) et confronté à un deuxième déflecteur (4b), qui est plus long que le premier déflecteur (4a), et qui est fixé à la paroi latérale opposée de la chambre (10), les deux déflecteurs étant inclinés vers le bas par rapport au plan perpendiculaire de l'axe axial, et présentant une séparation à la partie inférieure des déflecteurs qui configure une ouverture (3) pour permettre la décantation des solides et des boues.

**6.** Le dispositif selon l'une quelconque des revendications précédentes 1 à 5, dans lequel il comprend deux ou plusieurs cloisons inclinées (4) formant déflecteur, chacune étant constituée d'une paire de déflecteurs : un premier déflecteur (4a) fixé à une paroi latérale de la chambre principale (10) et confronté à un deuxième déflecteur (4b), qui est plus long que le premier déflecteur (4a), et qui est fixé à la paroi latérale opposée de la chambre (10), les deux déflecteurs étant inclinés vers le bas par rapport au plan perpendiculaire de l'axe axial, et présentant une séparation à la partie inférieure des déflecteurs qui configure une ouverture (3) pour permettre la décantation des solides et des boues.

**7.** Le dispositif selon l'une quelconque des revendications précédentes 1 à 6, dans lequel les moyens de dérivation comprennent un capteur de débitmètre (38) situé au niveau d'un tuyau d'entrée (1) pour mesurer le flux entrant ; un tuyau de dérivation d'UASB et une vanne (37), le débitmètre (38) étant configuré pour détecter des flux de pointe d'eaux usées entrantes et envoyer un signal à des moyens de commande (20) configurés pour fermer la vanne d'alimentation (16) de la chambre (10) de réacteur UASB et pour ouvrir la vanne de dérivation (37) de l'UASB qui fait communiquer directement le réservoir (12) d'alimentation par pulsations avec le séparateur à trois phases (8) de la chambre (10) du réacteur UASB situé à la partie supérieure de celle-ci.

**8.** Un procédé de traitement d'eaux usées non décantées en utilisant le dispositif combiné réacteur UASB - digesteur selon l'une quelconque des revendications 1 à 7, dans lequel ledit procédé comprend

a) le fait d'alimenter la chambre (10) du réacteur UASB et de générer une impulsion par :

a.1) le fait d'alimenter le réservoir (12) du dispositif d'injection et de mélange des eaux usées avec un flux d'eaux usées et avec des boues générées à l'intérieur de la chambre (10) du réacteur UASB et digérées dans la chambre (5) du digesteur anaérobie, introduites dans la chambre (10) du réacteur UASB au moyen du tuyau (40) à boues recyclées ;
a.2) le fait d'ouvrir automatiquement (uniquement) la vanne (16) d'alimentation de la chambre du réacteur, tandis que la vanne de dérivation de l'UASB (37) et la vanne mélangeuse (41) du digesteur sont fermées, au moyen du capteur de niveau d'eau (19) pour mesurer le niveau effectif minimum $H_{min}$ d'eaux usées et le niveau effectif maximum $H_{max}$ d'eaux usées à l'intérieur du réservoir d'alimentation (12), qui envoie un signal au moyen de commande (20) de la vanne de la chambre du réacteur d'alimentation lorsque le volume effectif à l'intérieur du réservoir d'alimentation atteint le niveau maximum $H_{max}$ pour générer une impulsion de débit d'eaux usées par gravité qui traverse le collecteur d'entrée (15) qui relie la sortie (14) du réservoir d'alimentation (12) avec la chaîne de distribution (17), injectant ainsi ladite impulsion d'eaux usées dans la chambre (10) du réacteur à lit de boue ;
a.3) le fait de distribuer l'impulsion d'eaux usées depuis la chaîne de distribution (17) vers la partie inférieure du lit de boues (21) de la chambre (10) du réacteur, au moyen des buses d'injection (18), et
a.4) le fait de fermer automatiquement la vanne (16) d'alimentation de la chambre du réacteur au moyen du capteur de niveau d'eau (18) qui, lorsque le volume effectif à l'intérieur du réservoir d'alimentation (12) atteint le niveau minimum $H_{min}$, envoie un signal au moyen de commande (20), de couper la pulsation ;

et **caractérisé en ce que** le procédé comprend également :
b) le fait d'alimenter la chambre (5) du digesteur anaérobie par impulsion, par :

b.1) le fait d'alimenter le réservoir (12) du dispositif d'injection et de mélange d'eaux usées avec un flux d'eaux usées, et avec les boues générées à l'intérieur de la chambre (10) du réacteur UASB et digérées dans la chambre (5) du digesteur anaérobie, introduites dans la chambre (10) du réacteur UASB au moyen du tuyau (40) à boues recyclées ;
b.2) le fait d'ouvrir automatiquement la vanne mélangeuse anaérobie (41), tandis que la vanne de dérivation (37) du réacteur UASB et la vanne d'alimentation (16) du réacteur UASB sont fermées, au moyen du capteur de niveau d'eau (18) pour mesurer le niveau effectif minimum $H_{min}$ d'eaux usées et le niveau effectif maximum $H_{max}$ d'eaux usées à l'intérieur du réservoir d'alimentation (12), qui envoie un signal au moyen de commande (20) de la vanne mélangeuse anaérobie (41) lorsque le volume effectif à l'intérieur du réservoir (12) atteint le niveau maximum $H_{max}$ pour générer par gravité une impulsion de flux d'eaux usées qui traverse le collecteur d'entrée (15) reliant la sortie (14) du réservoir d'alimentation (12) à la chaîne de distribution (42) du digesteur, injectant ainsi ladite impulsion d'eaux usées et les boues dans la chambre (5) du digesteur anaérobie ;

b.3) le fait de distribuer par gravité le flux d'eaux usées et de boues depuis la chaîne de distribution anaérobie (42) jusqu'au fond de la chambre (5) du digesteur anaérobie au moyen des buses d'injection (43) ; et

b.4) le fait de fermer automatiquement la vanne mélangeuse (41) du digesteur au moyen du capteur de niveau d'eau (18) qui envoie un signal au moyen de commande (20) de couper la pulsation lorsque le volume effectif à l'intérieur du réservoir d'alimentation (12) atteint le niveau minimum $H_{min}$.

9. Le procédé selon la revendication 8, dans lequel les eaux usées non décantées sont soumises à des températures submésophiles égales ou inférieures à 15°C et/ou ont une température présentant une fluctuation dans le temps allant de ±7,5°C par rapport à une température moyenne.

10. Le procédé selon l'une quelconque des revendications 8 ou 9, dans lequel l'étape b), qui résulte de la fermeture de la vanne (16) d'alimentation de la chambre du réacteur et de l'ouverture de la vanne mélangeuse (41) de la chambre du digesteur anaérobie, est activée une fois toutes les deux heures à une fois par heure.

11. Le procédé selon l'une quelconque des revendications 8 à 10, dans lequel le capteur de niveau d'eau (18) est piloté par des moyens de commande (20) qui commutent d'une impulsion à l'autre.

12. Le procédé selon l'une quelconque des revendications 8 à 11, dans lequel le procédé comprend également :

c.1) le fait d'alimenter le réservoir (12) du dispositif d'injection et de mélange des eaux usées avec un flux d'eaux usées et avec les boues générées à l'intérieur de la chambre (10) du réacteur UASB et digérées dans la chambre (5) du digesteur anaérobie, introduites dans la chambre (10) du réacteur UASB au moyen du tuyau (40) à boues recyclées ;

c.2) le fait de mesurer le flux entrant par un capteur de débitmètre (38), configuré pour envoyer un signal aux moyens de commande (20) lorsqu'un flux entrant de pointe est détecté, pour ouvrir la vanne de dérivation (37) de l'UASB tout en fermant la vanne (16) de chambre d'alimentation de réacteur et la vanne mélangeuse (41) de chambre de digestion ;

c.3) le fait de distribuer le flux d'eaux usées et de boues depuis le réservoir d'alimentation (12) vers le séparateur à trois phases (8) à la partie supérieure de la chambre (10) du réacteur UASB, au moyen de la conduite de dérivation (37) de l'UASB.

FIG. 1a (prior art)

FIG. 1b (prior art)

FIG. 1c (prior art)

FIG. 2

FIG. 3 (invention)

Figure 4 (invention)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3009408 A1

- US 4253956 A
- WO 2006132523 A1

**Non-patent literature cited in the description**

- **MAHMOUD et al.** Anaerobic sewage treatment in a one-stage UASB reactor and a combined UASB-Digester system,. *Water Research,* 2004

- **JULES B. VAN LIER.** Environmental Anaerobic Technology. *Anaerobic Sewage Treatment using UASB Reactors: Engineering and Operational Aspects,* 2010, 59-89